# EUROPÄISCHE PATENTSCHRIFT

(11) **EP 2 610 048 B1**
(45) Veröffentlichungstag und Bekanntmachung des Hinweises auf die Patenterteilung: **19.08.2020**
(21) Anmeldenummer: 12189957.9
(22) Anmeldetag: 25.10.2012
(51) Int. Cl.: B30B 1/06, B30B 15/06, B29C 33/30, B29C 44/58, E04D 13/16

(54) **Schäumvorrichtung zur Herstellung von Dämmplatten**
Foaming device for producing insulation panels
Dispositif de moussage destiné à la fabrication de plaques isolantes

(30) Priorität: 29.12.2011 DE 202011109598 U
(43) Veröffentlichungstag der Anmeldung: 03.07.2013
(73) Patentinhaber: Kurtz GmbH, 97892 Kreuzwertheim (DE)
(72) Erfinder: Gesuato, Stephan, 97877 Wertheim (DE)
(74) Vertreter: HGF

(56) Entgegenhaltungen:
- EP-A2- 2 072 208
- DE-A1-102006 059 796
- DE-U1- 8 807 466
- DE-U1-202004 003 679
- JP-A- 62 208 912
- US-A- 3 921 515
- US-A1- 2006 251 861
- US-A1- 2008 168 741

## Beschreibung

Die Erfindung betrifft eine Vorrichtung zur Herstellung von geschäumten Dämmplatten mit einer von Formplatten und Formrahmen umgebenden Schäumform gemäß dem Oberbegriff des Anspruchs 1.

Aus der DE 10 2006 059 796 A1 gehen ein Verfahren und eine Vorrichtung zur Steuerung und Regelung von Stösselabweichungen an servo-elektrischen Pressen hervor. Dabei sollen Lageabweichungen eines Stössels beim Durchgang durch einen unteren Umkehrpunkt derart beeinflussbar sein, dass einerseits eine Eintauchtiefe und andererseits eine Kipplage des Stössels Steuer- oder regelbar ist.

In der US 3,921,515 A ist eine Pressvorrichtung, beispielsweise zum Zusammenpressen von Kunststoffflaschen beschrieben.

Aus der US 2006/251 681 A1 gehen eine Vorrichtung und ein Verfahren zum Herstellen von Dämmelementen hervor.

Aus der JP 62 208 912 A geht eine Vorrichtung zum Herstellen von geschäumten Körpern hervor.

Die DE 88 074 66 U1 betrifft eine aus einem Isoliermaterial, wie beispielsweise

Polysterenschaum bestehende rechteckige Dachplatte.

In der DE 20 2004 003 679 U1 ist ein Werkzeug gemäß dem Oberbegriff des Anspruchs 1 zur Herstellung von Formteilen mit zumindest einer flexiblen, einen Formraum begrenzenden, Formwandung. Diese Vorrichtung umfasst verstellbar gelagerte Wandungen, die jeweils auf einem elastisch verformbaren Trägerrahmen befestigt sind. Die Trägerrahmen sind bspw. auf sechs, als hydraulische Hubzylinder ausgebildeten, Verstelleinrichtungen gelagert. Auf diese Weise soll es möglich sein, die verstellbar gelagerten Wandungen gegenüber den feststehenden, den Formraum begrenzenden Rahmenwandungen schräg anzustellen und/oder zu verwölben. Durch die voneinander unabhängige Verstellung der Wandungen mittels der Verstelleinrichtungen soll es möglich sein, die Wandungen zur Korrektur von Ungenauigkeiten des Formteils schräg anzustellen, so dass bspw. eine zu dicke Seite des Formteils etwas dünner bzw. eine zu dünne Seite des Formteils etwas dicker ausgebildet wird.

Aus der US 2008/ 016 87 41 A1 gehen ein Verfahren und ein System zum Herstellen von Wandelementen hervor.

In der EP 2 072 208 A2 sind eine Dämmplatte sowie ein Verfahren zu deren Herstellung offenbart.

Schäumvorrichtungen zur Herstellung von Dämmplatten sind in vielfaltiger Art aus dem Stand der Technik bekannt. Je nach Anwendungsfall und Ausführungsform von Dämmplatten werden diese insbesondere bei Fassadendämmplatten im Einzelverfahren hergestellt. Im Fall, dass Dämmplatten benötigt werden, welche einen keilförmigen Aufbau besitzen, scheitert ein derartiges Ausführungsverfahren aus dem Stand der Technik. Diesbezüglich ist es bekannt, insbesondere Dachgefälleplatten, mittels Schneiden aus einem großen Block herzustellen. Hierbei wird zunächst in bekannter Art und Weise ein geschäumter Dämmblock hergestellt, welcher hierbei die Hauptabmessungen der herzustellenden Dämmplatte aufweist. Zur Erzielung der keilförmigen Gestalt wird der geschäumte Block unter einem geneigten Winkel über die gesamte Fläche der Dammplatte durchgeschnitten.

Es ist offensichtlich, dass ein derartiges Herstellungsverfahren zur Herstellung von keilförmigen Dämmplatten mit wesentlichen Nachteilen behaftet ist. Wenngleich zunächst einmal die Herstellung eines geschäumten Blocks einfach und kostengünstig zu bewerkstelligen ist, ist jedoch das nachfolgende Schneiden über die gesamte Fläche der Dämmplatte zeit- und kostenaufwendig sowie mit Materialschädigungen verbunden. Insbesondere wird hierbei zudem die Oberfläche der hergestellten Dämmplatte nachteilig beeinflusst. Weiterhin ist es offensichtlich, dass bei Herstellung einer Mehrzahl von Dämmplatten aus einem geschäumten Block es nahezu zwangsläufig zu einem Abfallstück beim Zuschneiden kommt.

Aufgabe der vorliegenden Erfindung ist es daher, eine Vorrichtung zur Herstellung von Dämmplatten zur Verfügung zu stellen, mittels derer keilförmige Dämmplatten kostengünstiger und mit verbesserter Qualität als bei bisher hergestellten keilförmigen Dämmplatten zur Verfügung gestellt werden.

Die gestellte Aufgabe wird durch eine erfindungsgemäße Vorrichtung gemäß dem Anspruch 1 gelöst.

Vorteilhafte Ausführungsformen sind Gegenstand der Unteransprüche. Die gattungsgemäße Vorrichtung ist zunächst einmal bestimmt zur Herstellung von geschäumten Dämmplatten. Wenngleich es theoretisch denkbar wäre, mittels der Vorrichtung einen größeren Block herzustellen, um diesen sodann in Scheiben oder Stücken zu unterteilen unter Bildung einer Mehrzahl von Dämmplatten, so ist in aller Regel davon auszugehen, dass jeweils eine singuläre Dämmplatte in einem Herstellungsprozess hergestellt wird. Diese hergestellten Dämmplatten finden insbesondere als Dachgefälleplatten in der Gebäudeisolierung Verwendung.

Erforderlich ist diesbezüglich zunächst einmal eine Schäumform, welche hierbei hinsichtlich deren Geometrie der Formgebung der herzustellenden Dämmplatte entspricht. Insofern stellt die Schäumform in der Vorrichtung eine Art Kavität dar, innerhalb derer die Herstellung der Dämmplatte durchgeführt wird. Die Schäumform wird hierbei definiert durch zwei gegenüberliegende Formplatten sowie einen umgebenden Formrahmen. Eine der Formplatten bildet hierbei einen Boden, wobei die entsprechend gegenüberliegende Formplatte einen Deckel bildet. Zwischen den Formplatten entsteht ein freier Abstand, welcher folglich die Dicke der Schäumform bzw. die Dicke der herzustellenden Dämmplatten definiert. Umgebend wird der Freiraum zwischen den beiden Formplatten, d.h. die Schäumform, von einem Formrahmen umschlossen, wobei es zunächst unerheblich ist, ob dieser Formrahmen ebenso die Formplatten bzw. eine der Formplatten umschließt oder lediglich den Abstand zwischen den beiden Formplatten überbrückt. Zumindest wird von den Formplatten sowie dem Formrahmen eine entsprechend im Wesentlichen geschlossene Schäumform gebildet.

Unerheblich ist es zunächst, welche Zuordnung zwischen der Boden-Formplatte bzw. der Deckel-Formplatte und dem Formrahmen gegeben ist. In der regulären Ausführungsform ist jedoch zumindest die Deckel-Formplatte vom Formrahmen entfernbar zur Entnahme der hergestellten Dämmplatte. Gleichfalls, wie im Stand der Technik, ist es hierbei unerheblich, auf welche Weise die Entfernung der Deckel-Formplatte vom Formrahmen erfolgt, wobei insbesondere eine schwenkbar angebundene Lösung besonders bevorzugt wird.

Wenngleich in aller Regel die Deckel-Formplatte im Formrahmen eintaucht bzw. darauf aufliegt, ist es für die gattungsgemäße Ausführung unerheblich, wenn der Formrahmen mehrteilig ausgeführt ist und hierbei ein deckelseitiger Abschnitt des Formrahmens mit der Deckel-Formplatte fest verbunden ist oder die Deckel-Formplatte einstückig einen Abschnitt des Formrahmens umfasst. Diese Betrachtung wird im Weiteren vernachlässigt, kann jedoch für den Fachmann ohne weiters alternativ hinzu gefügt werden. Zumindest ist vorgesehen, dass bei Entfernung der Deckel-Formplatte mit oder ohne Abschnitt des Formrahmens die Dämmplatte auf dieser Seite entnehmbar oder auswerfbar ist. In diesem Sinne umfasst im Folgenden der Begriff "Deckel-Formplatte" ebenso einen - sofern derart ausgeführt - deckelseitigen Abschnitt des Formrahmens.

Die Boden-Formplatte ist hingegen in aller Regel nicht derart vom Formrahmen entfernbar, dass auf dieser Seite gleichfalls eine Entnahme der Dämmplatte möglich wäre. Jedoch ist es auch in diesem Falle zunächst unerheblich, ob die Boden-Formplatte fest mit dem Formrahmen verbunden ist und insofern beispielsweise einstückig ausgeführt ist, oder ob hingegen die Boden-Formplatte relativ zum Formrahmen verstellbar ist.

Zur Realisierung einer keilförmigen Dämmplatte wird nunmehr in der Vorrichtung zur Herstellung der Dämmplatten eine Schwenkvorrichtung integriert. Hierbei weist die Schwenkvorrichtung mindestens einen Schwenkantrieb auf, mittels dem zumindest eine der Formplatten in ihrer Winkelanordnung zur gegenüberliegenden Formplatte einstellbar ist.

Durch diese neu geschaffene Ausführungsform einer Schäumvorrichtung unter Einsatz einer Schwenkvorrichtung wird es erstmalig ermöglicht, keilförmige Dämmplatten direkt in der Schäumform herzustellen, ohne dass es einer nachfolgenden Zerschneidung eines größeren geschäumten Blocks bedarf. Mit dem Entfall einer nachfolgenden Bearbeitung durch Schneiden zur Herstellung der Dämmplatte entfällt besonders vorteilhaft der negativer Einfluss auf die Oberfläche der Dämmplatte. Weiterhin ist es offensichtlich, dass durch das neu ermöglichte Herstellungsverfahren ein ansonsten üblicher Abfallrest beim Schneiden eines Blockes ebenso entfällt.

Hinsichtlich der Ausführung der Schwenkvorrichtung ist es zunächst unerheblich, ob hierbei mittels der Schwenkvorrichtung die Boden-Formplatte oder alternativ die Deckel-Formplatte oder sogar beide Formplatten zugleich in ihrer Winkelstellung geändert werden. Maßgeblich ist lediglich, dass die Deckel-Formplatte relativ zur Boden-Formplatte in ihrer Winkelanordnung derart geändert werden kann, dass sich eine keilförmige Schäumform bildet. Weiterhin ist es offensichtlich, dass nicht nur ein feststehender Winkelversatz zwischen der Boden-Formplatte und der Deckel-Formplatte vorgesehen ist, sondern vielmehr zumindest eine der beiden Formplatten aktiv in der Winkelanordnung verstellt werden kann, so dass Dämmplatten mit unterschiedlichen Keilwinkeln hergestellt werden können.

Besonders vorteilhaft ist es hierbei, wenn die Schwenkvorrichtung zumindest zwei an der schwenkbaren Formplatte angeordnete Schwenklagerungen aufweist. Hierbei bedarf es der Anordnung eines Schwenkantriebs an zumindest einer Schwenklagerung. In dieser Ausführung erfolgt zur Änderung der Winkelanordnung ein Einsatz des Schwenkantriebs in Anbindung an dem einen Schwenklager, womit ein Schwenken der Formplatte um die jeweils andere Schwenklagerung einhergeht.

Von welcher Art die Schwenklagerung ist, ist zunächst unerheblich. Wesentlich ist lediglich, dass die prozessbedingten Kräfte übertragen werden können. Insofern ist es gleichfalls unerheblich, ob es sich bei der Schwenklagerung um ein Scharnier, eine Kugellagerung oder eine andersartige Lagerungsausführung handelt.

Weiterhin ist es zunächst unerheblich, welchen Schwenkwinkel die Schwenklagerungen ermöglichen, sofern zumindest der vorgesehene Stellbereich für die Winkelanordnung zwischen den Formplatten ermöglicht wird. In bevorzugter Ausführungsform werden hier die Schwenkvorrichtung sowie die schwenkbare Formplatte dahingehend ausgelegt, dass zumindest eine Winkeländerung von 1°, besonders bevorzugt von zumindest 2°, ermöglicht wird. Hinsichtlich der vorhandenen Restriktionen bei der Auslegung der schwenkbaren Formplatte und deren Einbau im Formrahmen ist es weiterhin vorteilhaft, den Schwenkwinkel, d.h. die Winkeländerung, auf 4°, vorzugsweise 3°, zu beschränken.

In besonders vorteilhafter Weise ist die schwenkbare Formplatte innerhalb des Formrahmens angeordnet. Durch die Änderung der Winkelanordnung zwischen den Formplatten ändert sich zwangläufig der Abstand zwischen den beiden Formplatten am umlaufenden Rand. Hieraus resultierend bedarf es einer sich ändernden Länge des Formrahmens zur umlaufenden Schließung der Schäumform. Dies wird entsprechend besonders einfach bewirkt, wenn der Formrahmen gleichfalls die schwenkbare Formplatte umschließt. Hierbei ist es des Weiteren besonders vorteilhaft, wenn die schwenkbare Formplatte die Boden-Formplatte und die Deckel-Formplatte die gegenüberliegende Formplatte bildet.

Bei dieser Ausführung ist zu berücksichtigen, dass durch ein Schwenken der schwenkbaren Formplatte, d.h. eine Änderung der Winkelanordnung zwischen den Formplatten, sich ein Spalt als Abstand zwischen dem Rand der schwenkbaren Formplatte und dem Formrahmen ändert. Daher ist es vorteilhaft, den möglichen Schwenkwinkel auf einen geringen Winkel von beispielsweise 2° bis 3° zu beschränken, als dass hierdurch bereits die meisten in der Praxis erforderlichen keilförmigen Dämmplatten realisiert werden können. Somit kann die entstehende Spaltbildung zwischen dem umlaufenden Rand der schwenkbaren Formplatte und dem Formrahmen innerhalb eines prozessbedingt zulässigen Bereichs gehalten werden.

Weiterhin ist es besonders vorteilhaft, wenn bereits in einer Ausgangsstellung, ohne Einsatz der Schwenkvorrichtung, eine derartige Winkelanordnung zwischen der schwenkbaren Formplatte und der gegenüberliegenden Formplatte vorliegt, dass eine keilförmige Dämmplatte gebildet wird. In diesem Falle ist in der Ausgangstellung die Oberfläche zur Schäumform zumindest einer Formplatte geneigt zur gegenüberliegenden Formplatte angeordnet. Hierbei wird in vorteilhafter Weise die Winkelanordnung zwischen den Formplatten in der Ausgangsstellung unter Berücksichtigung der möglichen Winkeländerung durch die Schwenkvorrichtung ausgewählt. Beträgt beispielsweise die mögliche Winkeländerung zwischen den Formplatten ausgehend von der Ausgangsstellung ±1,5°, so ist durch die Wahl der Winkelanordnung in der Ausgangsstellung von 2,5° ein Keilwinkel bei den Dämmplatten zwischen 1° und 4° realisierbar.

Welche der beiden Formplatten in der Ausgangsstellung eine geneigte Anordnung aufweist ist zunächst unerheblich. Hierbei kommt in Betracht bei beiden Formplatten eine geneigte Ausführung zu wählen. Ebenso ist es möglich, die der schwenkbaren Formplatte gegenüberliegende Formplatte als in der Ausgangsstellung geneigte Formplatte zu wählen, wobei die schwenkbare Formplatte in der Ausgangsstellung rechtwinkelig zum Formrahmen ausgerichtet ist.

In besonders bevorzugter Ausführung ist jedoch die der schwenkbaren Formplatte gegenüberliegende Formplatte rechtwinkelig zum Formrahmen angeordnet und die schwenkbare Formplatte weist bereits in der Ausgangsstellung eine Winkelanordnung zur gegenüberliegenden Formplatte auf. D.h. die schwenkbare Formplatte ist nicht parallel zur gegenüberliegenden Formplatte angeordnet. Dies begründet sich insbesondere mit der späteren Verwendung und Verlegung der Dämmplatten, wobei durch die besonders bevorzugte Gestalt der Dämmplatten mit einer rechtwinkeligen Anordnung einer Oberfläche der Dämmplatten zum umlaufenden Rand der Dämmplatte ein quasi fugenfreies und spaltfreies Verlegen der Dämmplatten möglich ist.

In besonders bevorzugter Ausführungsform wird eine Formplatte demontierbar bzw. auswechselbar in der Vorrichtung angeordnet. Die Auswechselbarkeit hat den besonderen Vorteil, dass bei einer begrenzten Einstellbarkeit des Schwenkwinkels mittels der Schwenkvorrichtung von beispielsweise ±1,5° durch einen Tausch einer Formplatte ein beliebiger Winkelbereich wählbar ist. Diesbezüglich ist es beispielsweise möglich, eine erste Formplatte in der Grundstellung mit einem Winkelversatz von beispielsweise 1,5° zur gegenüberliegenden Formplatte auszuführen. Eine weitere hierzu tauschbare Formplatte weist beispielsweise den Winkelversatz von 4,5° auf und wiederum eine weitere den Winkelversatz von 7,5°. Mittels der Tauschbarkeit einer Formplatte sowie der Verstellbarkeit der schwenkbaren Formplatte mittels der Schwenkvorrichtung wird somit im Beispielfall ein gesamter Winkelbereich zwischen 0° bis 9° realisiert. Dies deckt weitestgehend sämtliche Anwendungsfälle für insbesondere Dachgefälleplatten ab.

In der besonders bevorzugten Ausführung ist die schwenkbare Formplatte austauschbar mit der Schwenkvorrichtung verbunden. Hierbei kann zum einen die Schwenklagerung direkt das Kupplungsmittel zur Befestigung der Formplatte an der Schwenkvorrichtung sein, wie auch alternativ die schwenkbare Formplatte mittels Verbindungsmittel an der Schwenklagerung angebunden sein kann.

In besonders bevorzugter Ausführungsform weist die Schwenkvorrichtung zumindest drei Schwenklagerungen sowie zumindest zwei an zwei Schwenklagerungen angreifende Schwenkantriebe auf. Durch den Einsatz von drei räumlich versetzten Schwenklagerungen unter Einsatz von zwei Schwenkantrieben wird eine räumliche Verstellung der schwenkbaren Formplatte ermöglicht. Insofern kann nicht nur eine Verstellung der schwenkbaren Formplatte dergestalt erfolgen, dass entlang lediglich einem Seitenrand der Schäumform bzw. der herzustellenden Dämmplatte eine keilförmige Gestalt entsteht, sondern vielmehr können diagonal über die herzustellende Dämmplatte Keilwinkel gebildet werden, d.h. alle Seiten der Schäumform bzw. der herzustellenden Dämmplatte weisen eine Keilform auf.

Weiterhin ist es besonders vorteilhaft, wenn die Schwenkvorrichtung zu jeder Schwenklagerung einen Schwenkantrieb aufweist. Somit können insbesondere gegenläufige Bewegungen der Schwenkantriebe realisiert werden und somit wird in einfacher Weise der mittlere Abstand der schwenkbaren Formplatte relativ zur gegenüberliegenden Formplatte nicht durch ein Schwenken der schwenkbaren Formplatte durch Einsatz der Schwenkantriebe beeinflusst, wenngleich auch dies möglich ist.

Weitergehend ist es besonders vorteilhaft, wenn die Schwenkvorrichtung zumindest vier verteilt angeordnete Schwenklagerungen, insbesondere Kugellagerungen, aufweist, welche jeweils mit einem Schwenkantrieb verbunden sind. Somit wird eine sichere Anbindung der schwenkbaren Formplatte und zugleich eine räumliche Verstellung hinsichtlich der Winkelanordnung zwischen den gegenüberliegenden Formplatten ermöglicht.

Besonders vorteilhaft ist es weiterhin, wenn der Schwenkantrieb einen Spindelmotor mit einer Gewindespindel als Stellmittel aufweist. Somit kann durch Einsatz des Spindelmotors eine präzise Einstellung des Schwenkwinkels der schwenkbaren Formplatte mittels definiertem Ein- und Ausfahren des Stellmittels mit Angriff an der Schwenklagerung realisiert werden. Der Spindelmotor eignet sich insbesondere dahingehend, als dass eine präzise Einstellung bei Übertragung hoher Kräfte gewährleistet wird, wobei es auf eine geringe Geschwindigkeit des Spindelmotors nicht ankommt.

Weiterhin ist es besonders vorteilhaft, wenn die Vorrichtung weiterhin eine Verstellvorrichtung aufweist. Hierbei umfasst die Verstellvorrichtung zumindest einen Verstellantrieb, mittels dem ein Nennabstand der beiden Formplatten einstellbar ist. Hierbei bezieht sich der Nennabstand auf denjenigen Abstand zwischen der Boden-Formplatte und der Deckel-Formplatte, welcher vorliegt ohne Berücksichtigung der Schwenkvorrichtung. Diesbezüglich bedarf es einer Verstellbarkeit zumindest einer der beiden Formplatten relativ zur gegenüberliegenden Formplatte mittels des Verstellantriebes. Hierbei ist es zunächst unerheblich, ob die Boden-Formplatte oder die Deckel-Formplatte oder alternativ auch beide Formplatten mittels einer Verstellvorrichtung verstellbar sind. In aller Regel ist jedoch davon auszugehen, dass eine der beiden Formplatten mittels des Verstellantriebs verstellbar ist und hierbei zugleich sich relativ zum Formrahmen bewegt. Maßgeblich ist zumindest, dass durch die Verstellung einer Formplatte unter Änderung des Nennabstands entsprechende Dämmplatten mit unterschiedlichen Materialstärken gebildet werden können.

Zur Realisierung des entsprechenden Verstellantriebs stehen verschiedene Ausführungsformen zur Verfügung, wobei insbesondere die Ausführung mit einem Spindelmotor als Verstellantrieb bevorzugt zum Einsatz kommen kann, wobei eine Gewindespindel des Spindelmotors ein- und ausgefahren werden kann. Entsprechend der Notwendigkeit, die Änderung des Nennabstands jeweils nur zur Chargenänderung durchzuführen, ist insofern eine langsame Bewegung hinreichend, während hierbei eine präzise Einstellung des Nennabstandes bevorzugt wird. Entsprechendes wird durch den Spindelantrieb besonders begünstigt.

Grundsätzlich ist es zunächst unerheblich, wie die Relativzuordnung der schwenkbaren Formplatte oder der von der Verstellvorrichtung verstellbaren Formplatte zum Formrahmen erfolgt. Zum einen ist es diesbezüglich möglich, die schwenkbare bzw. verstellbare Formplatte im Formrahmen derart zu lagern, dass eine Gleitbewegung der schwenkbaren Formplatte im Formrahmen erfolgt. Aufgrund der erforderlichen Schwenkbarkeit ist diese Gleitführung jedoch bei der im Formrahmen schwenkbaren Formplatte mitunter schwierig zu realisieren. Gleichfalls kann eine Rollen- oder Kugellagerung der bewegten Formplatte im Formrahmen vorgesehen sein. Hierbei kann ebenso vorgesehen sein, dass die Lagerung, d.h. eine Gleitlagerung oder eine Rollenlagerung, federelastisch unterstützt wird, wodurch Winkeländerungen und somit Änderungen in der Spaltweite durch ein Schwenken der schwenkbaren Formplatte ausgeglichen werden können. Wesentlich ist zumindest, dass die Verstellbarkeit der schwenkbaren Formplatte innerhalb des vorgesehenen Verstellbereichs gewährleistet wird. Insbesondere bei Berücksichtigung einer Verstellbarkeit einer Formplatte im Formrahmen mittels der Verstellvorrichtung und der hiermit verbundenen Relativbewegung gilt es bleibende Schäden zu verhindern. Bei dem veränderlichen Spalt zwischen der schwenkbaren Formplatte und dem Formrahmen ist es vorteilhaft, wenn die schwenkbare Formplatte über anderweitige Führungen derart geführt wird, dass keine Anlage der Formplatte am Formrahmen zu befürchten ist. Hierbei können beispielsweise Säulenführungen zwischen der Schwenkvorrichtung hinter der Formplatte und einem Anbauteil des Formrahmens vorgesehen sein. Bei Vorhandensein einer Verstellvorrichtung in Ergänzung zur Schwenkvorrichtung kann vorteilhafter Weise der Formrahmen verlängert werden und hierbei kann ein nicht schwenkender Teil der Schwenkvorrichtung mittels einer Lageranordnung im Formrahmen gelagert sein.

Unabhängig von der Lagerung der schwenkbaren Formplatte relativ zum Formrahmen wird in vorteilhafter Weise die schwenkbare Formplatte mit einer Gleitdichtung versehen, welche hierbei eine derartige Elastizität aufweist, dass Änderungen der Weite des Spaltes zwischen der schwenkbaren Formplatte und dem Formrahmen unerheblich auf die Wirksamkeit der Gleitdichtung sind.

Vorteilhaft in der Anwendung einer Verstellvorrichtung in Ergänzung zur Schwenkvorrichtung ist es, wenn der Verstellantrieb derart angeordnet ist, dass sich dieser funktionell in einer Reihe mit dem Schwenkantrieb befindet. Das bedeutet, dass bei einer Verstellung der schwenkbaren Formplatte mittels des Verstellantriebs zugleich der Schwenkantrieb der Schwenkvorrichtung verfahren wird. Dies erfolgt beispielsweise indem der Verstellantrieb zunächst einmal den gesamten Schwenkantrieb verfährt, an welchem wiederum die schwenkbare Formplatte angebunden ist. Aufgrund der verwendungsbestimmten Aufgabe des Schwenkantriebes mit der einhergehenden Winkeländerung gestaltet sich somit der Einsatz des Verstellantriebs vorteilhafter als bei umgekehrter Anordnung mit einem Verstellantrieb zwischen dem Schwenkantrieb und der schwenkbaren Formplatte.

Unabhängig davon, ob lediglich eine Schwenkvorrichtung mit einem Schwenkantrieb vorhanden ist oder ob zusätzlich zur Schwenkvorrichtung mit dem Schwenkantrieb weiterhin eine Verstellvorrichtung mit einem Verstellantrieb vorhanden ist, ist es besonders vorteilhaft, wenn eine der beiden Formplatten relativ zum Formrahmen im Wesentlichen stehend angeordnet ist. Hierbei ist bevorzugt die schwenkbare Formplatte innerhalb des Formrahmens angeordnet, das heißt der Formrahmen umgibt neben der Schäumform zudem ebenso die schwenkbare Formplatte. Hierdurch wird erreicht, dass lediglich eine der beiden Formplatten, d.h. die schwenkbare Formplatte, innerhalb des Formrahmens verstellbar auszuführen ist, während hingegen die andere Formplatte lediglich den Abschluss auf dem Formrahmen bilden muss. Hierbei ist mit feststehend nicht zwingend gemeint, dass es sich hierbei um die Boden-Formplatte handelt. Vielmehr bildet hingegen in vorteilhafter Weise die Deckel-Formplatte die entsprechend stehend angeordnete Formplatte, welche insofern zur Entnahme der Dämmplatte aus der Schäumform entfernt werden kann.

Alternativ zur Anordnung zweier getrennter Antriebe als Verstellantrieb und als Schwenkantrieb ist es besonders vorteilhaft, den Schwenkantrieb zugleich als Verstellantrieb auszuführen. Somit gibt es lediglich einen Antrieb bzw. einen Antriebssatz, welcher zugleich zur Einstellung des Nennabstandes als auch zur Realisierung der geforderten Winkelstellung zum Einsatz kommen kann. Diesbezüglich ist insbesondere der Einsatz von Spindelantrieben vorteilhaft, da in beiden Antriebsfällen langsame Bewegungen hinreichend sind und eine hohe Einstellgenauigkeit ermöglicht wird.

Im Stand der Technik ist es bei Dachgefälleplatten praktisch nicht möglich an diesen Stufenabsätze vorzusehen. Dies bedingt sich insbesondere mit dem regulären Herstellungsverfahren aus dem Stand der Technik mittels Schneiden eines Blockes. Hingegen ist es besonders vorteilhaft, wenn die Dämmplatte mit einem Stufenabsatz versehen werden kann. Diesbezüglich bedarf es in vorteilhafter Weise am Formrahmen oder an der Boden-Formplatte an einer Seite bzw. an zwei angrenzenden Seiten der Schäumform eines Stufenabsatzes. Hierzu komplementär weist die Deckel-Formplatte auf der gegenüberliegenden Seite bzw. den gegenüberliegenden Seiten der Schäumform einen komplementären Stufenabsatz auf. Dies begünstigt insbesondere die spätere Verwendung der Dämmplatten zur Fügung derselben ohne Entstehung eines durchgehenden Spaltes zwischen den einzelnen Dämmplatten.

Hierbei ist es besonders vorteilhaft, wenn die Höhe des Stufenabsatzes, das heißt in Richtung des betrachteten Abstandes zwischen den beiden Formplatten, veränderbar ist. Dies gilt insbesondere unter Berücksichtigung des Einsatzes einer Verstellvorrichtung zur Änderung des Nennabstandes.

Weiterhin ist es besonders vorteilhaft bei der Verwendung der geschäumten Dämmplatten zur Gebäudeisolierung, wenn zumindest eine der beiden Formplatten auf der zur Schäumform weisenden Seite eine erhabene und/oder vertiefte Struktur aufweist. Hierbei wird beim Schäumen der entsprechenden Dämmplatten eine komplementäre Struktur in den hergestellten Dämmplatten abgebildet. Die Ausführung der Struktur ist hierbei zunächst unerheblich, wobei sich diese nach der geforderten Verwendung ausrichten kann.

In besonders vorteilhafter Weise ist die Struktur derart ausgebildet, dass in der hergestellten Dämmplatte eine Oberfläche mit deutlich erhöhter Rauhigkeit entsteht. Hierbei ist die gebildete Oberfläche der Dämmplatte zumindest doppelt so groß wie die aus den Abmessungen der Formplatte resultierende Fläche. Insbesondere in der Verwendung zur Gebäudedämmung wird somit eine deutlich bessere Haftung von sowohl Kleber als auch Putz oder dergleichen an der entsprechenden Dämmplatte aufgrund der mehr als doppelt so großen Kontaktfläche gewährleistet.

Weiterhin wird in vorteilhafter Weise auf der Oberfläche der Dämmplatte auf zumindest einer Seite ein maßstäbliches, insbesondere vertieftes, Linienraster abgebildet. Entsprechend bedarf es bei der zugehörigen Formplatte einer erhabenen Linienstruktur. Die maßstäbliche Ausführung des Linienrasters begünstigt die schnelle und unkomplizierte Konfektionierung einer Dämmplatte zum Anschluss an entsprechenden Bruchteilen von Dämmplatten, beispielsweise am Ende einer zu dämmenden Gebäudefläche.

Hinsichtlich der Verwendung als Gebäudedämmplatte ist es weiterhin vorteilhaft, wenn die Struktur auf den Oberflächen der beiden Formplatten unterschiedlich gewählt ist, so dass den unterschiedlichen Anforderungen hinsichtlich der Anbringung der Dämmplatten auf verschiedenen Oberflächen Rechnung getragen wird. Somit kann beispielsweise eine Oberfläche der Dämmplatte ausgelegt sein zur Anbringung eines Klebers, wobei die andere Seite der Dämmplatte zur Aufbringung von Putz optimiert ist.

Durch die Erfindung wird eine neue Dämmplatte zur Gebäudeisolierung zur Verfügung gestellt. Diese weist hierbei zunächst einmal den gattungsgemäßen Aufbau aus einem geschäumten Kunststoffmaterial, insbesondere aus expandiertem Polystyrol, auf. Hierbei ist die Dämmplatte in der Plattenebene betrachtet rechteckig und weist im Querschnitt eine keilförmige Form auf. Der Winkelversatz zwischen der Unterseite und der gegenüberliegenden Oberseite der Dämmplatte liegt hierbei in einem Bereich zwischen 1° und 10°. Somit kann die gattungsgemäße Dämmplatte als Dachgefälleplatte Verwendung finden.

Charakteristisches Merkmal der erfindungsgemäßen Dämmplatte ist nunmehr, dass diese werkzeugfallend geformt ist. Dies bedeutet, dass sämtliche Oberflächen der Dämmplatte durch das Ausschäumen in einer Schäumform gebildet werden. Der im Stand der Technik zwangsläufig vorhandene Beschnitt einer Fläche der Dämmplatte ist hingegen nicht vorhanden. Somit liegen gleichmäßige Oberflächen der Dämmplatte sowohl auf der Ober- als auch auf der Unterseite vor. Diesbezüglich ist es unerheblich, ob aufgrund der Struktur des Schäumwerkzeugs gezielt unterschiedliche Strukturierungen oder Linienmuster oder dergleichen eingearbeitet sind. Maßgeblich ist, dass der im Stand der Technik übliche Sägeschnitt oder Glühdrahtschnitt nunmehr vollständig entfällt.

Entsprechend vorteilhaft ist die Herstellung der Dämmplatte, wenn diese mittels einer zuvor beschriebenen Ausführungsform einer Schäumvorrichtung erfolgt. Weiterhin ist es vorteilhaft, wenn die Oberseite und/oder Unterseite eine Oberflächenstruktur mit vergrößerter Rauheit oder einem Linienmuster aufweist. Somit kann werkzeugfallend bereits eine Berücksichtigung der Verwendung der Dämmplatte sowie des zu verbindenden Materials erfolgen bzw. vorteilhafte maßstäbliche Linienmuster eingearbeitet sein.

Die erfindungsgemäße Schäumvorrichtung führt unter Erweiterung zu einer erfindungsgemäßen Schäumanlage. Eine Ausführungsform der zuvor beschriebenen Schäumvorrichtung wird hierbei zur Bildung der Schäumanlage um eine Eingabeeinrichtung zur Erfassung der zu dämmenden Gebäudeoberflächen ergänzt. Alternativ hierzu kann ebenso eine Datenübernahmevorrichtung vorgesehen sein, um beispielsweise direkt aus CAD-Modellen des Gebäudes die notwendige zu dämmende Gebäudeoberfläche erfassen zu können. Weiterhin weist die Schäumanlage eine Berechnungseinrichtung zur Berechnung der erforderlichen Dämmplatten auf. Hierbei erfolgt ein Abgleich zwischen der erfassten Gebäudeoberflächen mit den Möglichkeiten zur Herstellung einzelner Dämmplatten in der Schäumform der Schäumvorrichtung.

Weiterhin weist die Schäumanlage eine Abfrageeinrichtung und/oder Einstellungs-Speichervorrichtung zur Erfassung der Ist-Einstellung der Schäumvorrichtung auf. Somit stehen zur Auswertung die Einstellungswerte zur Verfügung bzw. in der Steuerung der Schäumanlage ist der aktuelle Zustand der Schäumform hinsichtlich Abmessung sowie Winkelanordnung bekannt. Mittels einer Steuereinrichtung kann die Bestimmung der erforderlichen Soll-Einstellungen der Schäumvorrichtung durchgeführt werden. Die Soll-Einstellungen der Schäumvorrichtungen bestimmen sich hierbei aus den zuvor berechneten erforderlichen Dämmplatten zur Gebäudeisolierung. Hieraus abgeleitet ergeben sich die erforderliche Abmessung sowie die Winkelanordnung der Schäumform. Dies ist mit entsprechenden Soll-Einstellungen der Schäumvorrichtung verbunden. Mittels der Berechnungseinrichtung bzw. der Steuerungseinrichtung erfolgt nunmehr ein Abgleich zwischen den Soll-Einstellungen mit den Ist-Einstellungen. Bei Abweichung der Soll-Einstellungen von den Ist-Einstellungen erfolgt mittels der Steuerungseinrichtung eine Ansteuerung zumindest eines Antriebs bzw. einer Mehrzahl von Verstell- und/oder Schwenkantrieben unter einer Verstellung der Schäumvorrichtung, so dass im Folgenden die Schäumform die erforderliche Geometrie zur Herstellung der berechneten Dämmplatte aufweist. Somit wird eine Übereinstimmung der Soll-Einstellungen mit den Ist-Einstellungen bewirkt.

Durch die neu geschaffene Schäumanlage wird es ermöglicht, ausgehend von der Erfassung der zu dämmenden Gebäudeoberfläche einen vollständigen Satz an Dämmplatten herzustellen, welche entsprechend ohne weitere Nacharbeit zur Isolierung des Gebäudes zum Einsatz kommen können. Unerheblich ist es hierbei, ob aufgrund der Größe der Dämmplatten in den Hauptabmessungen ein Zuschnitt im Randbereich der zu isolierenden Gebäudeoberfläche unvermeidbar ist.

Wesentlicher Vorteil ist nunmehr, dass der gesamte Satz an Dämmplatten in einem Ablauf gefertigt werden kann und somit der gesamte Satz unmittelbar nach der Fertigung fertig konfektioniert zur Verwendung bereit steht. Es ist somit nicht erforderlich, den erforderlichen Satz an Dämmplatten aus einer Vielzahl von verschiedenen Dämmplatten hinsichtlich Stärke und Keilform zusammenzustellen.

Zum effizienten Transport der hergestellten Dämmplatten zum Verwendungsort ist es besonders vorteilhaft, wenn die Schäumanlage eine Wendeeinrichtung aufweist. Mittels dieser können die hergestellten Dämmplatten aus der Schäumform entnommen bzw. übernommen werden, wobei nachfolgend mittels der Wendeeinrichtung die hergestellten Dämmplatten wechselnd in entgegengesetzter Orientierung auf einem Stapel abgelegt werden können. Das heißt, dass trotz der Keilform bei jeweils zwei nacheinander folgenden Dämmplatten mit jeweils gleichem Keilwinkel eine zu einer Ablagefläche neue obere parallele Ablagefläche auf den beiden Dämmplatten entsteht und sich somit der Transport der Dämmplatten vereinfacht.

Eine erfindungsgemäße Schäumanlage ergänzt sich durch ein neues erfindungsgemäßes Verfahren, welches sich kennzeichnet durch die Abfolge mit Erfassung einer im Querschnitt keilförmig zu dämmenden Gebäudeoberfläche; der Berechnung der erforderlichen einzelnen keilförmigen Dämmplatten mit insbesondere stufenweise ansteigender Materialdicke; der Erfassung der Ist-Einstellungen der Schäumvorrichtung, insbesondere des eingestellten Winkelversatzes sowie eines eingestellten Abstands zwischen der Deckel-Formplatte und der Boden-Formplatte; der Bestimmung der erforderlichen Soll-Einstellung der Schäumvorrichtung mit einem nachfolgenden Abgleich der Ist-Einstellung mit den Soll-Einstellungen, wobei bei einer Abweichung oberhalb einer festgelegten Toleranz eine Verstellung der Deckel- und/oder Boden-Formplatte unter Anpassung eines Abstands und/oder eines Winkelversatzes zwischen der Deckel-Formplatte zur Boden-Formplatte erfolgt.

Die nachfolgenden Figuren skizzieren beispielhaft vorteilhafte Ausführungsformen einer erfindungsgemäßen Schäumvorrichtung.

Es zeigen:
- Fig. 1: eine Schäumvorrichtung mit zwei Schwenkantrieben;
- Fig. 2: die Spaltbildung zwischen der schwenkbaren Formplatte und dem Formrahmen zur Fig. 1;
- Fig. 3: beispielhafte Alternativen zur Auswechselbarkeit von schwenkbaren Formplatten;
- Fig. 4: die Einstellungsmöglichkeiten der schwenkbaren Formplatte zur Ausführung gemäß Fig. 1;
- Fig. 5: eine alternative Ausführungsform einer Schäumvorrichtung mit separater Verstellvorrichtung.

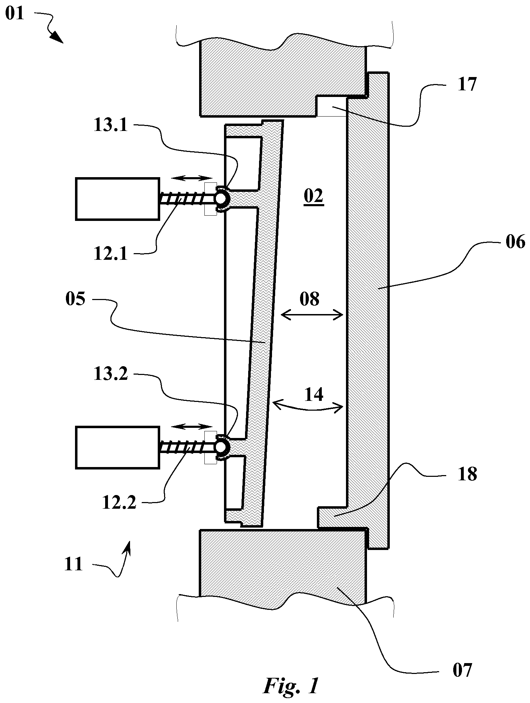

Die **Figur 1** zeigt eine Schäumvorrichtung 01 mit einer schwenkbaren Formplatte 05 sowie einer feststehenden Formplatte 06. Hierbei bildet die Deckel-Formplatte die feststehende Formplatte 06, wobei die Zuordnung zum Formrahmen 07 beim Herstellungsprozess unveränderlich ist. Naheliegenderweise kann die Deckel-Formplatte 06 zur Entnahme der hergestellten Dämmplatte entfernt werden mittels beispielsweise Schwenken oder Abheben. Die schwenkbare Formplatte wird insofern von der Boden-Formplatte 05 gebildet, welche sich innerhalb des Formrahmens 07 befindet und hierbei im Abstand 08 zur Deckel-Formplatte 06 verstellbar ist. Wie deutlich zu erkennen ist, weist die Boden-Formplatte 05 zur Deckel-Formplatte 06 einen Winkelversatz 14 dergestalt auf, dass eine keilförmige Schäumform 02 gebildet wird und somit keilförmige Dämmplatten hergestellt werden können. Zur Änderung des Winkelversatzes 14 bzw. der Winkelanordnung zwischen der Boden-Formplatte 05 und der Deckel-Formplatte 06 ist erfindungsgemäß eine Schwenkvorrichtung 11 vorgesehen. In diesem Ausführungsbeispiel wird die Schwenkvorrichtung 11 von zwei beabstandeten Schwenkantrieben 12 in Art von Spindelantrieben gebildet. Hierbei kann entsprechend die Gewindespindel ein- und ausgefahren werden, wodurch eine entsprechende Verstellung der schwenkbaren Formplatte 05 einhergeht. Hierbei kann sowohl bei gleichzeitigem Ausfahren der Abstand 08 zwischen den Formplatten 05, 06 verkleinert bzw. in umgekehrtem Fall vergrößert werden, als auch bei gegenläufiger Verstellung bzw. einseitiger Verstellung der Schwenkantriebe 12.1, 12.2 eine entsprechende Änderung des Winkelversatzes 14 bewirkt werden kann. Insofern bildet die Schwenkvorrichtung 11 zugleich eine Verstellvorrichtung zur Änderung des Nennabstands 08 zwischen den beiden Formplatten 05, 06. Zur Realisierung der entsprechenden Schwenkbarkeit der Schwenk-Formplatte 05 ist diese über Schwenklagerungen 13 mit den jeweiligen Schwenkantrieben 12 gekoppelt.

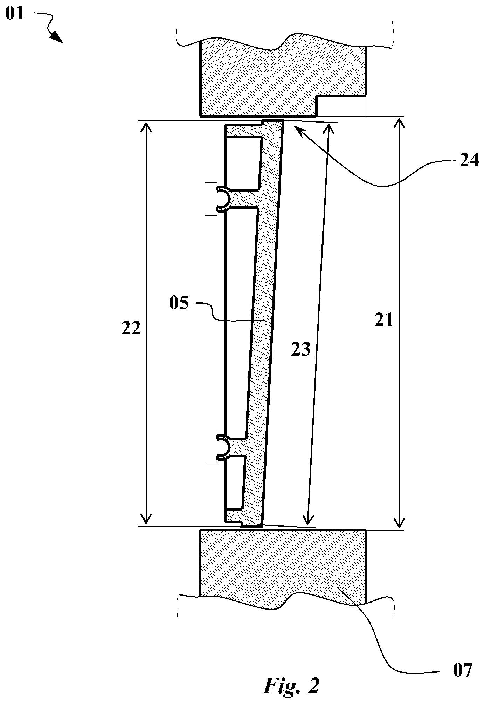

In der **Figur 2** wird nochmals die Schäumvorrichtung 01 aus Fig. 1 skizziert, unter Reduzierung auf die Betrachtung des Formrahmens 07 sowie der schwenkbaren Formplatte bzw. Boden-Formplatte 05. Zwischen der schwenkbaren Formplatte 05 sowie dem Formrahmen 07 bedarf es eines Spalts 24 zur Ermöglichung einer entsprechenden Verstellung der schwenkbaren Formplatte 05. In der Ausgangsstellung ergibt sich der Spalt 24 aus der Differenz der lichten Höhe 21 des Formrahmens 07 und der Höhe 22 der Formplatte 05 in übereinstimmender Messrichtung. Aufgrund der beispielhaften geneigten Ausführung der schwenkbaren Formplatte 05 weist diese jedoch in der Ausgangsstellung eine im Verhältnis zur Höhe 22 der Formplatte 05 größere Raumlänge 23 auf. Wird nunmehr die schwenkbare Formplatte 05 mittels des Schwenkantriebs 12 bzw. der Schwenkantriebe 12.1, 12.2 geschwenkt unter Änderung des Winkelversatzes 14, führt dies zu einer Änderung des Spalts 24. D.h. je nach Schwenkrichtung vergrößert oder verkleinert sich der Spalt 24. Im Extremfall kann der Spalt sich komplett schließen und somit den Schwenkwinkel zwangsweise begrenzen, wenn die Raumlänge 23 der schwenkbaren Formplatte 05 größer ist als die lichte Höhe 21 des Formrahmens 07, von dem in aller Regel auszugehen ist. Insofern wird der nutzbare Schwenkwinkel zur Änderung des Winkelversatzes 14 beschränkt durch die Wahl des größten zulässigen Spalts in einer Schwenkrichtung sowie dem Schließen des Spaltes in anderer Schwenkrichtung.

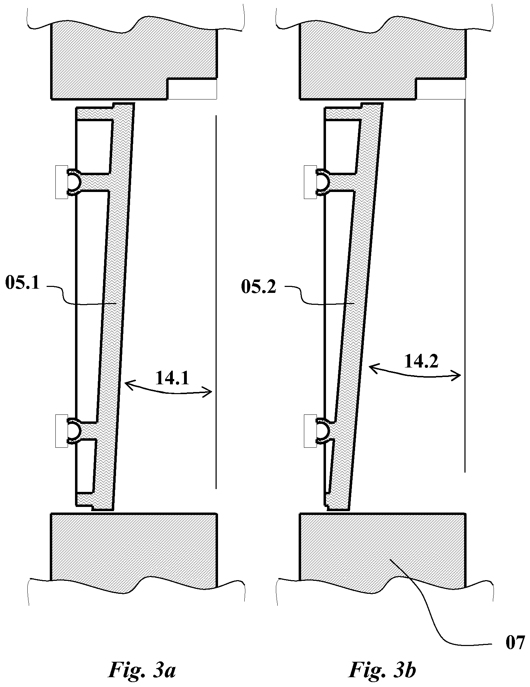

Zur Lösung der Problematik hinsichtlich einer möglicherweise begrenzten Änderung des Schwenkwinkels bzw. des Winkelversatzes 14 zeigt die **Figur 3** eine beispielhafte Lösung auf, bei welcher der Schäumvorrichtung 01 zwei Formplatten 05.1 sowie 05.2 zur Verfügung gestellt werden. Hierbei weisen diese beiden Formplatte 05.1 und 05.2 jeweils einen unterschiedlichen Winkelversatz 14.1 und 14.2 in der Ausgangsstellung bei Anbringung an der Schwenkvorrichtung 11 auf. Somit kann der aufgrund der Spaltbildung begrenzte Schwenkwinkel überwunden werden, indem die Formplatten 05.1 und 05.2 wechselnd getauscht werden je nach Erfordernis der einzustellenden Winkelanordnung 14 bzw. des Winkelbereichs.

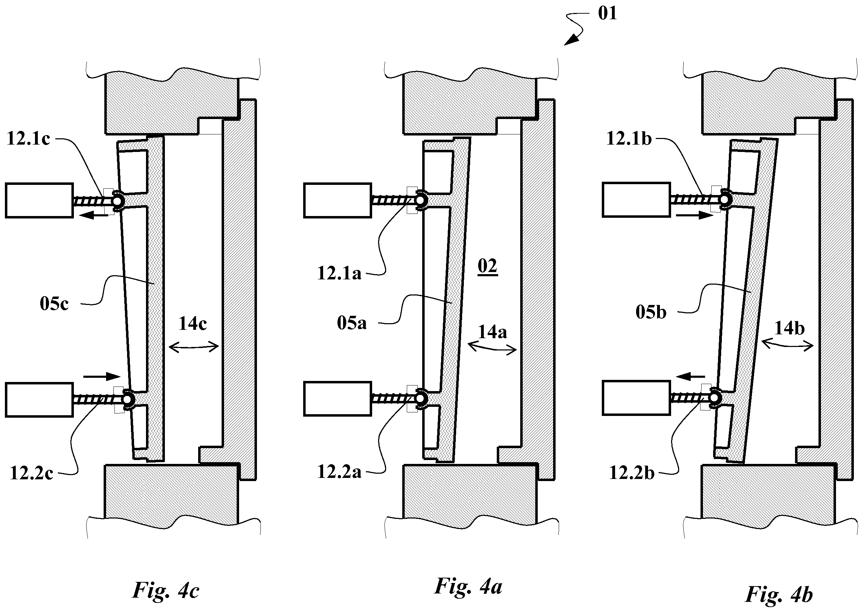

Die erfindungsgemäß vorgesehene Winkelverstellung der schwenkbaren Formplatte, im Beispielfall der Boden-Formplatte 05, und somit die Änderung des Winkelversatzes 14 wird beispielhaft in **Figur 4** skizziert. Hierzu zeigt die Fig. 4a die Schäumvorrichtung 01 in der Ausgangslage mit der Schäumform 02 in Keilform entsprechend dem Winkelversatz 14a bei Einstellung der schwenkbaren Formplatte 05a in der Ausgangsstellung bzw. der Schwenkantriebe 12a in der Ausgangsstellung. Erfolgt nunmehr ein Ausfahren des ersten Schwenkantriebs 12.1b sowie ein Einfahren des zweiten Schwenkantriebs 12.2b erfolgt hieraus resultierend eine Vergrößerung des Winkelversatzes 14b, wie in Fig. 4b skizziert. Hingegen erfolgt beim Einfahren des ersten Schwenkantriebs 12.1c sowie einem Ausfahren des zweiten Schwenkantriebs 12.2c eine Reduzierung des Schwenkwinkels 14c - siehe Fig. 4c.

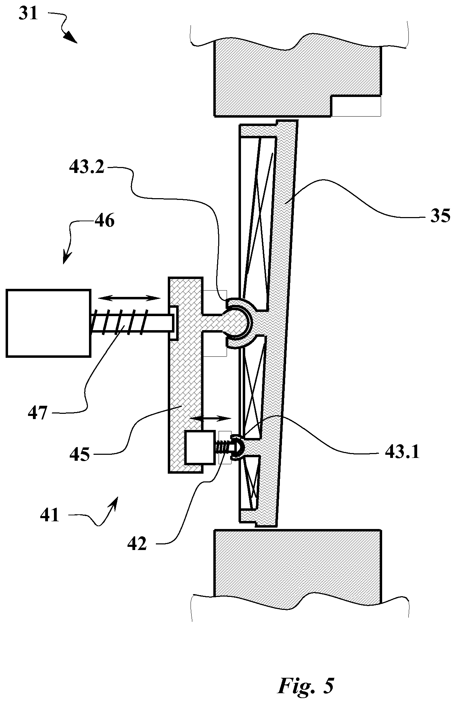

Abweichend vom Ausführungsbeispiel zu den vorherigen Figuren wird in der **Figur 5** ein weiteres Ausführungsbeispiel einer Schäumvorrichtung 31 skizziert, bei welcher eine in Reihe gekoppelte Schwenkvorrichtung 41 sowie eine Verstellvorrichtung 46 vorhanden ist. Hierbei kann die schwenkbare Formplatte 35 zunächst einmal mittels des Schwenkantriebs 41 in ihrer Winkelstellung geändert werden, wobei zu diesem Zweck die schwenkbare Formplatte 35 mittig gelagert ist und seitlich mittels eines einzelnen Schwenkantriebs 42 verstellt werden kann. Hierbei weist die Schwenkvorrichtung 41 einen Schwenkträger 45 auf, welcher wiederum mittels eines Verstellantriebs 47, beispielhaft in Art eines Spindelgetriebes, der Verstellvorrichtung 46 derart verstellt werden kann, dass hiermit weiterhin eine Änderung des Abstands zur anderen Formplatte einhergeht.

## Patentansprüche

1. Vorrichtung (01, 31) geeignet zur Herstellung von geschäumten Dämmplatten, mit einer einen Deckel bildenden Formplatte (06), einer einen Boden bildenden der Deckel-Formplatte gegenüberliegenden Formplatte (05, 35) und einem im Wesentlichen zwischen den beiden Formplatten (05, 35, 06) angeordneten Formrahmen (07), wobei die beiden Formplatten (05, 35, 06) und der Formrahmen (07) die Schäumform (02) bilden,
eine Schwenkvorrichtung (11, 41) mit mindestens einem Schwenkantrieb (12, 42), mit dem zumindest eine der Formplatten (05, 35, 06) in ihrer Winkelanordnung zur gegenüberliegenden Formplatte (06, 05, 35) einstellbar ist,
**dadurch gekennzeichnet,**
**dass** in einer Ausgangsstellung eine derartige Winkelanordnung zwischen den beiden Formplatten vorliegt, sodass eine keilförmige Dämmplatte ausbildbar ist.

2. Vorrichtung (01, 31) nach Anspruch 1,
**dadurch gekennzeichnet,**
**dass** die Schwenkvorrichtung (11, 41) mindestens zwei an der schwenkbaren Formplatte (05, 35) angeordnete Schwenklagerungen (13, 43) aufweist, wobei der Schwenkantrieb (12, 42) an mindestens einer der Schwenklagerungen (13, 43) angreift.

3. Vorrichtung (01, 31) nach Anspruch 1 oder 2,
**dadurch gekennzeichnet,**
**dass** der Schwenkantrieb (12, 42) einen Spindelmotor mit einer Gewindespindel als Stellmittel aufweist.

4. Vorrichtung (01, 31) nach einem der Ansprüche 1 bis 3,
**gekennzeichnet durch**
eine Verstellvorrichtung (11, 46) mit mindestens einem Verstellantrieb (12, 47), mit der durch Verstellung mindestens einer der Formplatten (05, 35, 06) der Nennabstand zwischen den beiden Formplatten (05, 35, 06) einstellbar ist.

5. Vorrichtung (01, 31) nach Anspruch 4,
**dadurch gekennzeichnet,**
**dass** der Verstellantrieb (12, 47) einen Spindelmotor mit einer Gewindespindel aufweist.

6. Vorrichtung (01) nach Anspruch 4 oder 5,
**dadurch gekennzeichnet,**
**dass** die Verstellvorrichtung (11) zugleich die Schwenkvorrichtung bildet.

7. Vorrichtung (01) nach einem der Ansprüche 1 bis 6,
**dadurch gekennzeichnet,**
**dass** die Boden-Formplatte (05, 35) die schwenkbare und/oder einstellbare Formplatte ist.

8. Vorrichtung (01) nach einem der Ansprüche 1 bis 7,
**dadurch gekennzeichnet,**
**dass** am Formrahmen (07) oder an der Boden-Formplatte (05, 35) auf einer Seite oder an zwei angrenzenden Seiten der Schäumform (02) ein Stufenabsatz vorhanden ist, wobei in der Deckel-Formplatte (06) auf der gegenüberliegenden Seite oder den gegenüberliegenden Seiten der Schäumform (02) ein komplementärer Stufenabsatz vorhanden ist.

9. Vorrichtung (01) nach Anspruch 8,
**dadurch gekennzeichnet,**
**dass** die Höhe des Stufenabsatzes veränderbar ist.

10. Vorrichtung (01) nach einem der Ansprüche 1 bis 9,
**dadurch gekennzeichnet,**
**dass** zumindest eine der beiden Formplatten (05, 35, 06) auf der zur Schäumform (02) weisenden Fläche eine erhabene und/oder vertiefte Struktur aufweist.

11. Schäumanlage geeignet zur Herstellung von geschäumten Dämmplatten unter Verwendung einer Vorrichtung (01, 31) nach einem der vorhergehenden Ansprüche, **gekennzeichnet durch**
- eine Eingabeeinrichtung und/oder Datenübernahmevorrichtung zur Erfassung der zu dämmenden Gebäudeoberfläche;
- eine Berechnungseinrichtung zur Berechnung der erforderlichen einzelnen Dämmplatten;
- eine Abfrageeinrichtung und/oder Einstellungsspeichervorrichtung zur Erfassung der Ist-Einstellungen der Schäumvorrichtung (01, 31);
- eine Steuerungseinrichtung zur Bestimmung der erforderlichen Soll-Einstellungen der Schäumvorrichtung (01, 31);
wobei mittels der Berechnungseinrichtung und/oder der Steuerungseinrichtung ein Abgleich zwischen den Soll-Einstellungen mit den Ist-Einstellungen erfolgt,
und wobei mittels der Steuerungseinrichtung eine Ansteuerung eines oder einer Mehrzahl von Verstell- (12, 47) und/oder Schwenkantrieben (12, 42) zur Verstellung der Schäumvorrichtung (01, 31) auf die Soll-Einstellungen bewirkt werden kann.

12. Schäumanlage nach Anspruch 11,
**gekennzeichnet durch**
eine Wendeeinrichtung, mittels der die hergestellten Dämmplatten aus der Schäumform (02) entnommen oder übernommen werden können und nachfolgend wechselnd in entgegen gesetzter Orientierung auf einem Stapel abgelegt werden können.

## Claims

1. A device (01, 31) suitable for producing foamed insulation panels, comprising a mold plate (06) which forms a lid, a mold plate (05, 35) which forms a bottom and is opposite the lid mold plate, and a mold frame (07) which is arranged substantially between the two mold plates (05, 35, 06), the two mold plates (05, 35, 06) and the mold frame (07) forming the foaming mold (02),
a pivoting device (11, 41) including at least one pivoting drive (12, 42) with which at least one of the mold plates (05, 35, 06) can be adjusted in its angular arrangement relative to the opposite mold plate (06, 05, 35),
**characterized in that**
in an initial position, there is such an angular arrangement between the two mold plates that a wedge-shaped insulation panel can be formed.

2. The device (01, 31) according to claim 1,
**characterized in that**
the pivoting device (11, 41) comprises at least two pivot bearings (13, 43) arranged on the pivotable mold plate (05, 35), the pivoting drive (12, 42) engaging at least one of the pivot bearings (13, 43).

3. The device (01, 31) according to claim 1 or 2,
**characterized in that**
the pivoting drive (12, 42) comprises a spindle motor with a threaded spindle as actuating means.

4. The device (01, 31) according to any of the claims 1 to 3,
**characterized by**
an adjusting device (11, 46) including at least one adjusting drive (12, 47) with which the nominal distance between the two mold plates (05, 35, 06) can be set by adjusting at least one of the mold plates (05, 35, 06).

5. The device (01, 31) according to claim 4,
**characterized in that**
the adjusting drive (12, 47) comprises a spindle motor including a threaded spindle.

6. The device (01) according to claim 4 or 5,
**characterized in that**
the adjusting device (11) simultaneously forms the pivoting device.

7. The device (01) according to any of the claims 1 to 6,
**characterized in that**
the bottom mold plate (05, 35) is the pivotable and/or adjustable mold plate.

8. The device (01) according to any of the claims 1 to 7,
**characterized in that**
a step shoulder is provided on the mold frame (07) or on the bottom mold plate (05, 35) on one side or on two adjacent sides of the foaming mold (02), a complementary step shoulder being provided in the lid mold plate (06) on the opposite side(s) of the foaming mold (02).

9. The device (01) according to claim 8,
**characterized in that**
the height of the step shoulder can be changed.

10. The device (01) according to any of the claims 1 to 9,
**characterized in that**
at least one of the two mold plates (05, 35, 06) comprises a raised and/or recessed structure on the surface facing the foaming mold (02).

11. A foaming system suitable for producing foamed insulation panels using a device (01, 31) according to any of the preceding claims,
**characterized by**
- an input device and/or data transfer device for detecting the building surface to be insulated;
- a calculation device for calculating the required individual insulation panels;
- a querying device and/or setting storage device for detecting the actual settings of the foaming device (01, 31);
- a control device for determining the required target settings of the foaming device (01, 31);
wherein a balance between the target settings and the actual settings is carried out by means of the calculation device and/or the control device,
and wherein the control device is able to cause an activation of one or a plurality of adjusting drives (12, 47) and/or pivoting drives (12, 42) for adjusting the foaming device (01, 31) to the target settings.

12. The foaming system according to claim 11,
**characterized by**
a turnover device by means of which the produced insulation panels can be removed or taken over from the foaming mold (02) and subsequently deposited alternately in opposite orientation on a stack.

## Revendications

1. Dispositif (01, 31) convenant pour la fabrication de plaques isolantes expansées en mousse, comprenant une plaque de formage (06) formant un couvercle, une plaque de formage (05, 35) formant un fond, opposée à la plaque de formage formant couvercle, et un cadre de formage (07) disposé sensiblement entre les deux plaques de formage (05, 35, 06), sachant que les deux plaques de formage (05, 35, 06) et le cadre de formage (07) forment la forme d'expansion en mousse (02),
un dispositif de pivotement (11, 41) comprenant au moins un entraînement de pivotement (12, 42) avec lequel au moins une des plaques de formage (05, 35, 06) est réglable dans sa disposition angulaire par rapport à la plaque de formage (06, 05, 35) opposée,
**caractérisé en ce que**
dans une position de départ, une telle disposition angulaire entre les deux plaques de formage est présente de sorte qu'une plaque isolante en forme de coin puisse être constituée.

2. Dispositif (01, 31) selon la revendication 1,
**caractérisé en ce que**
le dispositif de pivotement (11, 41) présente au moins deux paliers de pivotement (13, 43) disposés au niveau de la plaque de formage (05, 35) pivotable, sachant que l'entraînement de pivotement (12, 42) prend prise au niveau d'au moins un des paliers de pivotement (13, 43).

3. Dispositif (01, 31) selon la revendication 1 ou 2,
**caractérisé en ce que**
l'entraînement de pivotement (12, 42) présente un moteur à broche avec une broche filetée comme moyen de réglage.

4. Dispositif (01, 31) selon l'une des revendications 1 à 3,
**caractérisé par**
un dispositif de déplacement (11, 46) comprenant au moins un entraînement de déplacement (12, 47) avec lequel, par déplacement d'au moins une des plaques de formage (05, 35, 06), l'écart nominal entre les deux plaques de formage (05, 35, 06) est réglable.

5. Dispositif (01, 31) selon la revendication 4,
**caractérisé en ce que**
l'entraînement de déplacement (12, 47) présente un moteur à broche avec une broche filetée.

6. Dispositif (01) selon la revendication 4 ou 5,
**caractérisé en ce que**
le dispositif de déplacement (11) forme en même temps le dispositif de pivotement.

7. Dispositif (01) selon l'une des revendications 1 à 6,
**caractérisé en ce que**
la plaque de formage (05, 35) formant fond est la plaque de formage pivotable et/ou réglable.

8. Dispositif (01) selon l'une des revendications 1 à 7,
**caractérisé en ce que**
un épaulement étagé est présent au niveau du cadre de formage (07) ou au niveau de la plaque de formage (05, 35) formant fond, d'un côté ou de deux côtés adjacents de la forme d'expansion en mousse (02), sachant qu'un épaulement étagé complémentaire est présent dans la plaque de formage (06) formant couvercle du côté opposé ou des côtés opposés de la forme d'expansion en mousse (02).

9. Dispositif (01) selon la revendication 8,
**caractérisé en ce que**
la hauteur de l'épaulement étagé est modifiable.

10. Dispositif (01) selon l'une des revendications 1 à 9,
**caractérisé en ce que**
au moins une des deux plaques de formage (05, 35, 06) présente une structure en relief et/ou en creux sur la face tournée vers la forme d'expansion en mousse (02).

11. Installation d'expansion en mousse convenant pour la fabrication de plaques isolantes expansées en mousse au moyen d'un dispositif (01, 31) selon l'une des revendications précédentes,
**caractérisée par**
- un dispositif d'entrée et/ou dispositif de reprise de données pour la saisie de la surface de bâtiment à isoler ;
- un dispositif de calcul pour le calcul des plaques isolantes individuelles requises ;
- un dispositif de consultation et/ou dispositif d'enregistrement de réglages pour la saisie des réglages effectifs du dispositif d'expansion en mousse (01, 31) ;
- un dispositif de commande pour la détermination des réglages théoriques requis du dispositif d'expansion en mousse (01, 31) ;
sachant qu'une comparaison entre les réglages théoriques et les réglages effectifs est effectué au moyen du dispositif de calcul et/ou du dispositif de commande,
et sachant qu'un pilotage d'un ou d'une pluralité d'entraînements de déplacement (12, 47) et/ou de pivotement (12, 42) pour le déplacement du dispositif d'expansion en mousse (01, 31) aux réglages théoriques peut être réalisé au moyen du dispositif de commande.

12. Installation d'expansion en mousse selon la revendication 11,
**caractérisée par**
un dispositif de retournement au moyen duquel les plaques isolantes fabriquées peuvent être prélevées ou reprises de la forme d'expansion en mousse (02) et ensuite être déposées sur une pile dans une orientation opposée en alternance.
